# EUROPEAN PATENT SPECIFICATION

(11) **EP 0 839 819 B1**
(45) Date of publication and mention of the grant of the patent: **17.09.2003**
(21) Application number: 97402528.0
(22) Date of filing: 24.10.1997
(51) Int. Cl.: C07F 9/50, C07F 9/53

(54) **Method of preparing optically active diphosphine ligands**
Verfahren zur Herstellung von optisch aktiven Diphosphin-Liganden
Procédé de préparation de ligands diphosphine optiquement actifs

(30) Priority: 24.10.1996 JP 28215796
(43) Date of publication of application: 06.05.1998
(73) Proprietor: Takasago International Corporation, Tokyo 108 (JP)
(72) Inventor: Zhang, Xiaoyaong, Takasago International Corp., Hiratsuka-shi, Kanagawa-ken (JP); Sayo, Noboru, Takasago International Corp., Hiratsuka-shi, Kanagawa-ken (JP)
(74) Representative: Gillard, Marie-Louise

(56) References cited:
- EP-A- 0 754 696
- EP-A- 0 771 812
- DONGWEI CAI ET AL: "SYNTHESIS OF CHIRAL 2,2'-BIS(DIPHENYLPHOSPHINO)-1,1'-BINAPHTHY L (BINAP) VIA A NOVEL NICKEL-CATALYZED PHOSPHINE INSERTION" JOURNAL OF ORGANIC CHEMISTRY, vol. 59, no. 23, 18 November 1994, XP000476926
- ZHANG X ET AL: "Synthesis of partially hydrogenated 2,2'-bis(diphenylphosphenyl)-1, 1'-binaphthyl (BINAP) ligands and their application to catalytic asymmetric hydrogenation" J. CHEM. SOC., PERKIN TRANS. 1 (JCPRB4,0300922X);94; (16); PP.2309-22, KYOTO UNIV.;GRADUATE SCH. ENG.; KYOTO; 606-01; JAPAN (JP), XP002054854
- H. TAKAYA: "Practical synthesis of (R)- or (S)-2,2'-bis(diarylphosphino)-1,1'-binapht yls (BINAPs)" JOURNAL OF ORGANIC CHEMISTRY., vol. 51, no. 5, - 1986 EASTON US, pages 629-635, XP002022855

## Description

The present invention relates to a method for preparing an optically active diphosphine ligand which is used for the synthesis of a complex useful as a catalyst for a variety of asymmetric synthesis reactions.

Heretofore, many reports have been made on the complexes of transition metals which are used for asymmetric synthesis reactions such as asymmetric hydrogenation, asymmetric isomerization and asymmetric hydrosilylation. In particular, many of these complexes, which comprise a transition metal, such as ruthenium, rhodium, iridium or palladium, coordinated with an optically active tertiary phosphine compound, have superior characteristics as a catalyst for the asymmetric synthesis reactions. In order to further improve the catalytic performance of these complexes, many phosphine compounds having special structures have been developed (see, for example, Introductory Chemistry 32, «Chemistry of Organometallic Complexes», pp.237-238, Ed. Chemical Society of Japan, 1982 and «Asymmetric Catalysis in Organic Synthesis», R. Noyori, A wiley-Interscience Publication, 1996).

In particular, 2,2'-bis(diphenylphosphino)-1,1'-binaphthyl (hereinafter referred to as BINAP) is one of the excellent optically active phosphines. A rhodium complex (Japanese Patent Application Laid-Open (JP-A) No. 55-61,973) having BINAP as a ligand and a ruthenium complex (JP-A No. 61-6,390) having BINAP as a ligand have been already reported. Further, a rhodium complex (JP-A No. 60-199,898) having 2,2'-bis(di(p-tolyl)phosphino)-1,1'-binaphthyl (hereinafter referred to as p-Tol-BINAP) as a ligand and a ruthenium complex (JP-A No. 61-63,690) having the same ligand have been each reported to provide an excellent effect in an asymmetric hydrogenation reaction and in an asymmetric isomerization reaction. Furthermore, JP-A No. 4-139,140 discloses a ruthenium complex comprising 2,2'-bis(diphenylphosphino)-5,5', 6,6',7,7', 8,8'-octahydro-1,1'-binaphthyl (hereinafter referred to as H8-BINAP) as a ligand and reports that this complex provides an excellent effect in an asymmetric hydrogenation reaction.

An industrial method hitherto known as a method for preparing these phosphine compounds consists of the procedure illustrated by the following steps of reactions: bromination of a racemic binaphthol (7) by means of triphenylphophine dibromide at a high temperature (240 to 320 °C) to prepare compound (8), formation of a Grignard reagent (9) from the compound (8), condensation of the Grignard reagent (9) with a diarylphosphinyl chloride to produce a phosphine dioxide (10), optical resolution of the phosphine dioxide (10) to prepare compound (11), and reduction of the compound (11) by means of a reducing agent such as trichlorosilane to obtain a tertiary phosphine compound (a kind of BINAP) (1b) (H. Takaya, K. Mashima, K. koyano, M. yagi, H. kumobayashi, T.taketomi, S. Akutagawa, and R. Noyori, J. Org. Chem., 1986, Vol. 51, pp.629) : 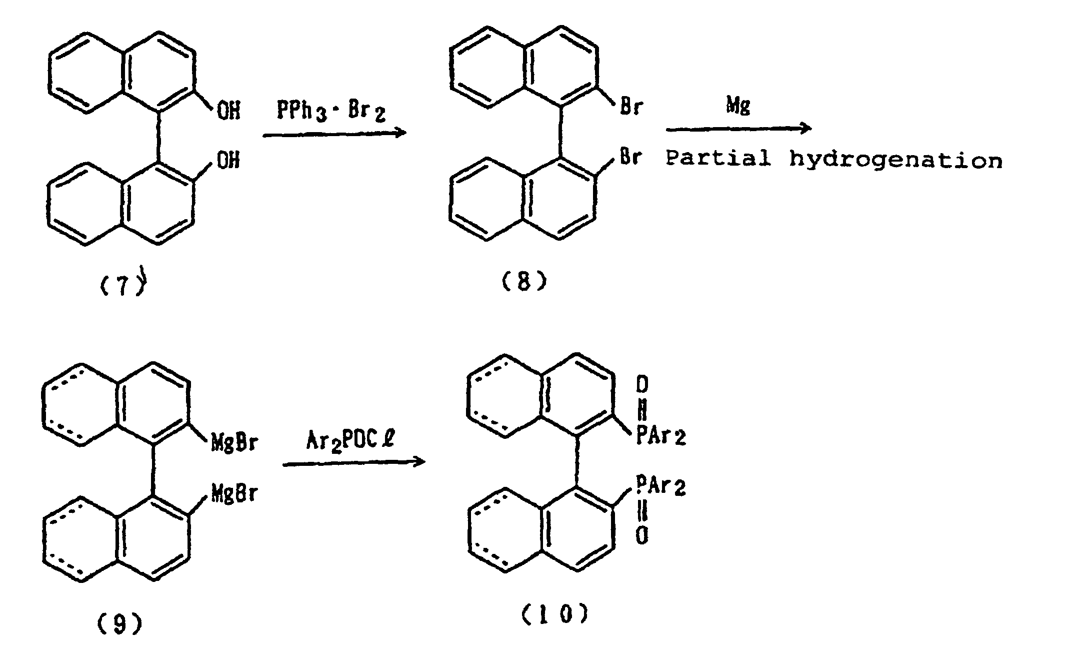 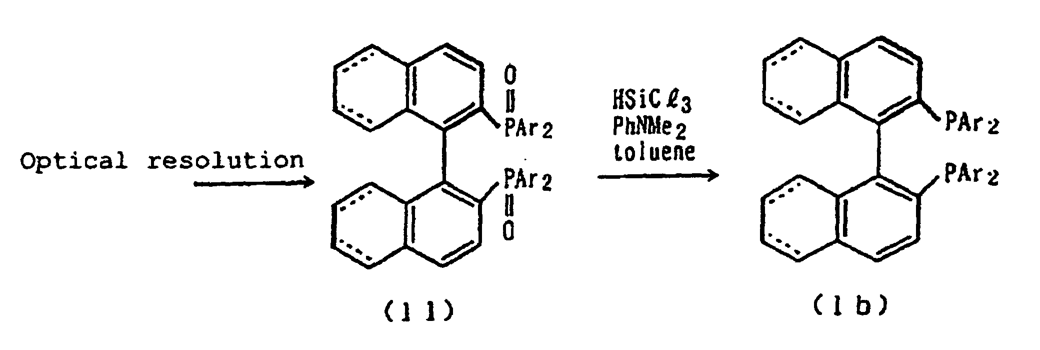 where the double line consisting of a continuous line and a dotted line signifies either a double bond or a single bond, respectively forming part of a naphthalene ring or an octahydronaphthalene ring depending on whether the naphthalene ring was subjected to the reduction or not; and Ar represents a phenyl group, a substituted phenyl group (bearing 1 to 3 substituents which may be the same or different and are selected from the group consisting of halogen atoms, a lower alkyl group, a lower alkoxy group and a halogenated lower alkyl group) or a naphthyl group which may bear a lower alkyl or lower alkoxy substituent.

Another method consists of the procedure comprising hydrogenation of binaphthyl bromide to prepare 5,5',6,6',7,7',8,8'-octahydrobinaphthyl bromide, formation of a Grignard reagent from the octahydrobinaphthyl bromide, condensation of the Grignard reagent with a diarylphosphinyl chloride to produce a phosphine dioxide, optical resolution of the phosphine dioxide, and reduction of the resulting compounds by means of a reducing agent such as trichlorosilane to obtain a tertiary phosphine compound (H8-BINAP) (X. Zhang, K. Mashima, K. koyano, N. Sayo, H. kumobayashi, S.Akutagawa, and H. Takaya, J. Chem. Soc. Perkin Trans. 1, 1994, p.2309). Yet another method consists of the procedure comprising preparation of 2,2'-bis(trifluoromethanesulfonyloxy)-1,1'-binaphthyl by use of optically active binaphthol and reaction of the 2,2'-bis(trifluoromethanesulfonyloxy)-1,1'-binaphthyl with diphenylphosphine in the presence of a nickel/phosphine complex to obtain BINAP (Dongwei Cai, Joseph F. Pyyack; Dean R. Bender, David L. Hughes, Thomas R. Verhoeven, and Paul J. Reider, J. Org. Chem., 1994, Vol. 59, p.7180).

However, each of the described methods of preparing an optically active phosphine compound has a drawback. For example, in the method by Takaya et al., the choice of a reaction vessel is limited, because a high temperature is necessary in the bromination of binaphthol and because hydrobromic acid is generated at the bromination. Further the method by Takaya et al. and the method by Zhang et al. are accompanied with operational difficulties, because a high temperature and a high hydrogen pressure are also necessary in the hydrogenation reaction of the binaphthyl bromide. Furthermore, these methods are uneconomical, if only one of the enantiomers is needed, because these methods require the optical resolution of the racemic reaction product. In addition, there are many racemic reaction products whose optical resolution is difficult. Besides, the method by Dongwei et al. has an inconvenience that the diphenylphosphine, used in the reaction is not suitable for use in a large amount in industries because of insufficient stability (readily oxidized) and toxicity, although this method does not require the optical resolution.

After studies to solve the above-mentioned problems, the present inventors have achieved the invention based on the discovery that the reaction between 2-trifluoromethanesulfonyloxy-2'-diarylphosphino-5,5',6,6',7,7',8,8'-octahydro-1,1'-binaphthyl with a disubstituted phosphine oxide in the presence of a transition metal/phosphine complex easily leads to the formation of 2-diarylphosphino-2'-diarylphosphinyl-5,5',6,6',7,7',8,8'-octahydro-1,1'-binaphthyl, which can be easily made into a H8-BINAP derivative by reduction.

The invention therefore provides a method of preparing a 2,2'-bis(diarylphosphino)-5,5',6,6',7,7',8,8' -octahydro-1, 1'-binaphthyl derivative represented by the general formula (1) 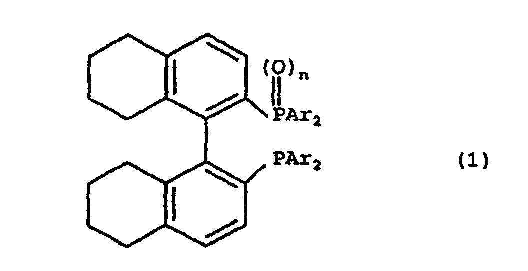 where n represents 0 or 1; and Ar means an aryl selected from : a phenyl group; a substituted phenyl group bearing 1 to 3 substituents which may be the same or different and are selected from the group consisting of a halogen atom, an alkyl group, an alkoxy group and a halogenated alkyl group; or a naphthyl group which may bear an alkyl or alkoxy substituent, said alkyl or alkoxy groups having 1 to 5 carbon atoms
- by reacting 2,2'-bis trifluoromethanesulfonyloxy-1,1'-octahydrobinaphthyl represented by the general formula (4) 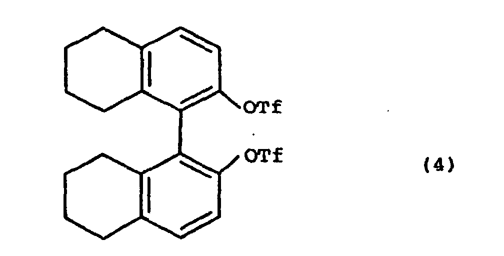 where Tf represents a trifluoromethanesulfonyl group; with a phosphine oxide represented by the general formula (3)

   Ar₂P(O)H (3)

   where Ar signifies the same meaning as defined above; in the presence of a palladium/phosphine complex to prepare 2-trifluoromethanesulfonyloxy-2'-diarylphosphinyl-1,1'-octahydrobinaphthyl represented by the general formula (5) 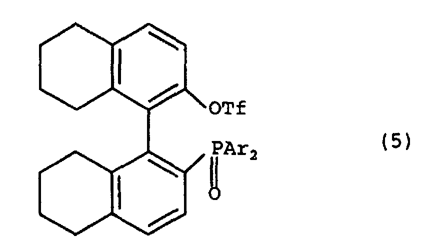 where Tf and Ar signify the same meaning as defined above;
- by reducing the reaction product to prepare 2-trifluoromethanesulfonyloxy-2'-diarylphosphino-1,1'-octahydrobinaphthyl represented by the general formula (2) 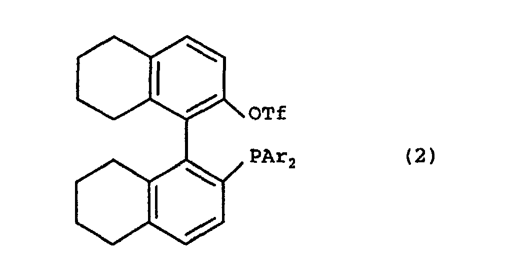
where Tf and Ar signify the same meaning as defined above;
- by reacting said 2-trifluoromethanesulfonyloxy-2'-diarylphosphino-1,1'-octahydrobinaphthyl with a phosphine oxide represented by the general formula (3) :

   Ar₂P(O)H (3)

   where Ar signifies the same meaning as defined above; in the presence of a transition metal/phosphine complex and
- optionally by reducing the product of the preceding step to prepare a compound of formula (1) wherein n is 0.

The present invention can be illustrated by the following reactions. 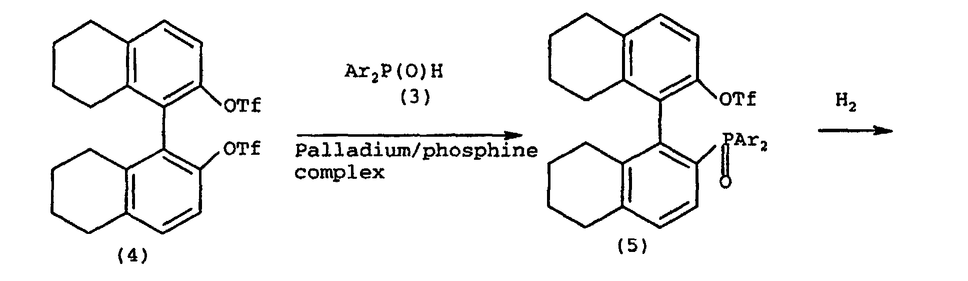 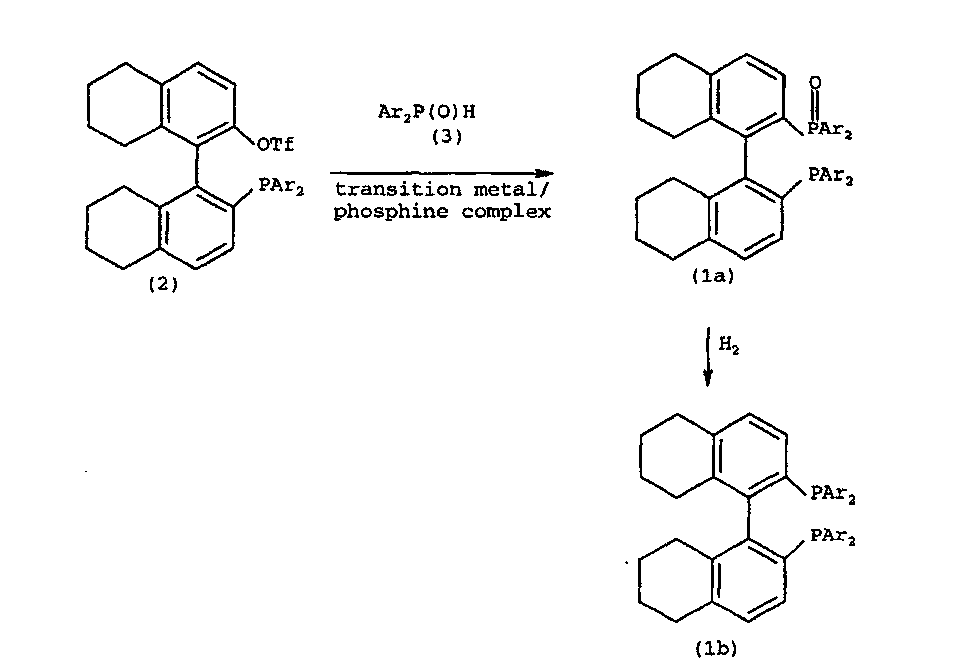 where Tf represents a trifluoromethanesulfonyl group; and Ar indicates the same meaning as defined previously.

That is, the method of the present invention comprises the following procedure: reaction between 2,2'bis(trifluoromethanesulfonyloxy)-1,1'-octahydrobinaphthyl represented by the general formula (4) and a phosphine oxide represented by the general formula (3) in the presence of a palladium/phosphine complex to form 2-trifluoromethanesulfonyloxy-2'-diarylphosphinyl-1,1'-octahydrobinaphthyl represented by the general formula (5); reduction of the product of the preceding reaction to prepare 2-trifluoromethanesulfonyloxy-2'-diarylphosphino-1,1'-octahydrobinaphthyl represented by the general formula (2); reaction between the product of the preceding reaction and phosphine oxide represented by the general formula (3) in the presence of a transition metal/phosphine complex to form a compound represented by the general formula (1a); and optionally reducing the product of the preceding step to prepare a compound represented by the general formula (1b).

The compound, which is used as a starting material in the present invention and represented by the general formula (4), can be prepared by, for example, the following reactions: 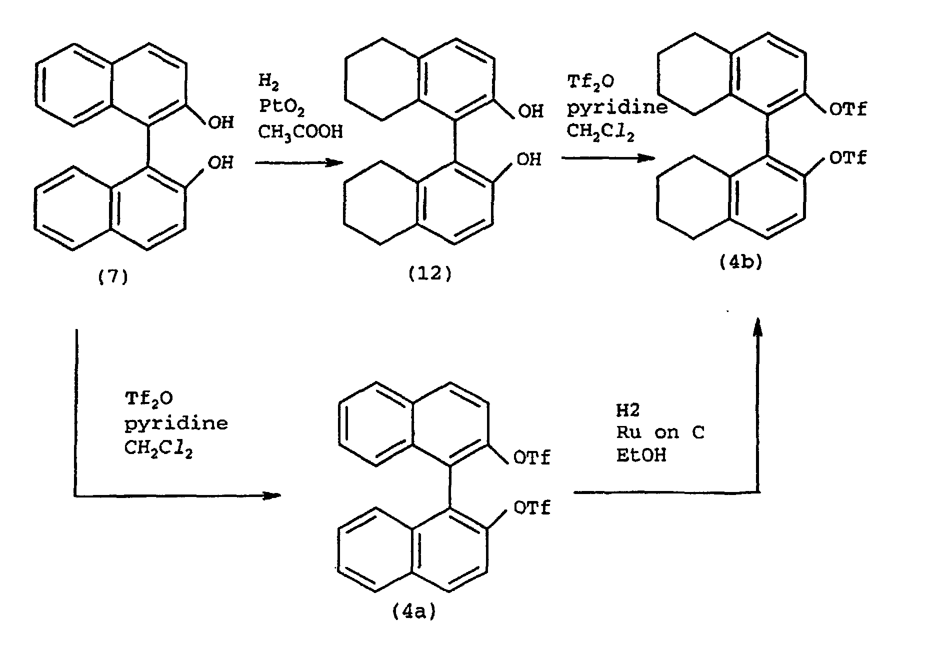 where Tf signifies the same meaning as defined previously.

That is, the compound (4b) can be obtained by a process comprising the steps of hydrogenation of optically active binaphthol (7) as a starting material in the presence of a catalytic amount of platinum dioxide to prepare 5,5',6,6',7,7',8,8'-octahydro-2,2'-binaphthol (12) by, for example, the method described in the literature (D.J. Cram, R. C. Helgeson, S. C. Peacock, L. J. Kaplan, L. A. Domeier, P. Moreau, K. Koga, J. M. Mayer, Y. Chao, M. G. Siegel, D.H.Hoffman, G. D. Y. Sogah, J. Org. Chem., 1978, Vol. 43, p.1930) and transforming the product of the preceding step into a ditrifluoromethanesulfonylated compound by, for example, the method described in the literatures (M. Vondenhof and J. Mattay, Tetrahedron Lett., Vol. 31, pp. 985-988, 1990 and L. Kurz, G. lee, D. Morgans Jr., M.J. Waldyke, and T. Ward, Tetrahedron Lett., Vol. 31, pp. 6321-6324, 1990) and the method described in the literature (Y. Uozumi, A. Tanahashi, S. Y. Lee, and T. Hayashi, J. Org. Chem., 1993, Vol.58, pp. 1945-1948). Meanwhile, the compound (4a) can be obtained by transforming the binaphthol (7) into a ditrifluoromethanesulfonylated compound by a similar method. Compound (4b) can also be obtained by the hydrogenation of compound (4a) by use of Ru/C as a catalyst in a solvent such as ethanol, methanol, propanol, isopropanol, tetrahydrofuran, 1,4-dioxane, ethyl acetate or a mixture thereof.

In the aforementioned formulae illustrating the method of the present invention, the examples of Ar include a substituted phenyl group bearing 1 to 3 subsituents which are selected from the group consisting of halogen atoms, alkyl group, alkoxy group and halogenated alkyl group. Examples of the halogen atoms include fluorine, chlorine, bromine and iodine atoms. Examples of the alkyl group include straight or branched alkyl groups having to 5 carbon atoms. Examples of the alkoxy group include straight or branched alkoxy groups having 1 to 5 carbon atoms. Examples of the halogenated alkyl group include straight or branched halogenated alkyl groups having 1 to 5 carbon atoms.

Examples of the substituted phenyl group include p-tolyl, p-methoxyphenyl, p-dimethylaminophenyl, p-t-butylphenyl, 3,5-dimethylphenyl, 3,5-dimethyl-4-methoxyphenyl, 3,4,5-trimethylphenyl, 3,5-di-t-butylphenyl, 3,4-methylenedioxyphenyl, 3,5-dimethoxyphenyl, 3,4,5-trimethoxyphenyl, p-chlorophenyl, 3,5-dichlorophenyl, p-fluorophenyl and p-trifluoromethylphenyl groups.

Examples of the naphthyl group include α-naphthyl and β-naphthyl groups. The naphthyl group may bear a substituent which is selected from straight or branched lower alkyl groups having 1 to 5 carbon atoms and straight or branched alkoxy groups having 1 to 5 carbon atoms. Examples of the substituted naphthyl group include 6-methoxy-naphthyl and 6-methoxy-naphthyl groups.

In the present invention, the reaction for the preparation of compound (5) from compound (4) and the reaction for the preparation of compound (1a) from compound (2) can be effected under essentially same conditions. The amount of the disubstituted phosphine oxide (3) used in the reactions is 1 to 3 times the molar equivalent of compound (4) or (2), preferably 1 to 1.5 times the molar equivalent thereof. Preferably, the disubstituted phosphine oxide (3) for use in the present invention is purified by means of recrystallization or silica gel column. The disubstituted phosphine oxide (3) can be synthesized by a procedure comprising transforming ArCl, ArBr or ArI into a Grignard reagent and reacting the Grignard reagent with diethyl phosphite according to the method by B. B. Hunt and B. C. Saudwers et al. described in J. Chem. Soc. 1957, p.2413 or the method by H.R. Hays et al. described in J. Org. Chem., 1968, Vol.33, p.3690,

The examples of the transition metal/phosphine complex include the complexes of transition metals such as copper, iron, cobalt, nickel and palladium. More specifically, the examples include the following compounds. In the following examples, Me stands for methyl, Ph stands for phenyl, dppe stands for 1,2-bisdiphenylphosphinoethane, dppp stands for 1,3-bisdiphenylphosphinopropane and dppb stands for 1,4-bisdiphenylphosphinobutane.
Cu: CuMe(PPh₃)₃, (CuMe)₂(dppe), CuCl(PPh₃)₃
Fe: Fe(CO)₂(PPh₃)₃, FeCl₂(PPh₃), FeCl₂(dppe), FeHCl(dppe), FeCl₃(PPh₃)₃, FeCl₂(dppp), FeCl₂(dppb)
Co: CoCl(PPh₃)₃, CoCl₂(dppe), CoCl₂(dppp), CoCl₂(dppb)
Ni: Ni(PPh₃)₄, Ni(PPh₃)₂, NiCl₂(dppe), NiCl₂(dppp), NiCl₂(dppb)
Pd: PdCl₂(PPh₃)₂, PdCl₂(dppe), PdCl₂(dppp), PdCl₂(dppb)

The transition metal/phosphine complex is used in a catalytic amount, preferably in the range of 5 to 20 mol% based on the amount of compound (4) or (2).

In order to neutralize the trifluoromethanesulfonyloxy group which splits off at the time of the reaction, a base is preferably present in the reaction. Examples of the base include 1,4-diazabicylco[2.2.2]octane (DABCO), diazabicycloundecene (DBU), tetramethylethylenediamine (TMEDA), dimethylaniline, 1,4-dimethylpiperazine, 1-methylpiperidine, 1-methylpyrrolidine, quinuclidine, 1-methylmorpholine, triethylamine, diisopropylethylamine and 1-methyl-2,2,6,6-tetramethylpiperidine.

Usually, the reaction is effected in a solvent. Examples of the solvent include N,N-dimethylformamide (DMF), dimethyl sulfoxide (DMSO), N-methylpyrrolidone (NMP) and dimethylacetamide (DMA). Generally, the reaction temperature is in the range of 80 to 140 °C, preferably in the range of 100 to 120°C.

The reaction for the preparation of compound (2) from compound (5) and the reaction for the preparation of compound (1b) from compound (1a) are effected by using a conventional reducing means, for example, a reducing agent such as trichlorosilane.

More specifically, the reduction reactions in the present invention utilize benzene, toluene or xylene as a solvent, triethylamine, diisopropylethylamine, dimethylaniline or diethylaniline as a base, trichlorosilane as a reducing agent, temperatures being in the range of 80 to 130°C.

Compounds (1a) and (1b) prepared by the above-described methods of the present invention respectively are useful as a ligand for forming a complex with a transition metal. Compounds (1a) and (1b) can be defined by the same following formula (1): 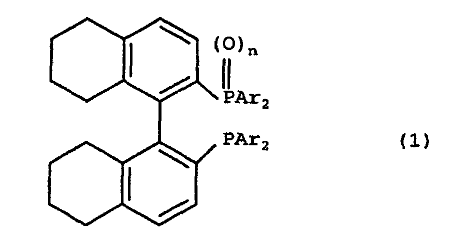 where n represents 0 or 1 and Ar indicates the same meaning as defined previously.

The complex of the present invention, which is obtained from compound (1) and a transition metal, is useful as a catalyst for an asymmetric synthesis reaction.

The present invention provides an economical method for preparing H8-BINAP derivative by use of an optically active binaphthol as a starting material. In addition, a complex of a transition metal with a H8-BINAP derivative can be used as a catalyst in an asymmetric synthesis reaction, for example, an asymmetric hydrogenation reaction or an asymmetric hydrosilylation reaction, to provide the target product at a high yield and at a high enantiomer excess ratio. Furthermore, a reaction product having a desirable absolute configuration can be obtained in the asymmetric synthesis reaction by using as a catalyst a transition metal complex, and a ligand which is either a (-) enantiomer or a (+) enantiomer of the compound of the present invention.

### EXAMPLES

In order that those skilled in the art will be better able to practice the present invention, the following examples are given by way of illustration and not by way of limitation. The measurements in the examples were conducted by the use of the following apparatus. Nuclear magnetic resonance: ¹H NMR AM400 (400MHz) (manufactured by Bruker Co., Ltd.)

³¹P NMR AM400 (162MHz) (manufactured by Bruker Co., Ltd.)
Melting point: MP-500D (manufactured by Yanaco Co., Ltd.) Optical rotation: DIP-4 (manufactured by Nihon Bunkoh Co., Ltd.)
Gas chromatography (GLC): 5890-II (manufactured by Hewlett Packard Co., Ltd.)
High-performance liquid chromatography(HPLC): LC10AT & SPD10A (manufactured by Shimadzu Corporation)
Mass spectrometry(MASS): M-80B (manufactured by Hitachi Ltd.)

### Example 1

### Synthesis of (R)-2,2'-dihydroxy-5,5',6,6',7,7',8,8'-octahydro-1,1'-binaphthyl

(R)-binaphthol (3.0 g, 10.5 mmol), 15% platinum dioxide (360 mg) and 75 ml of acetic acid were placed in a 200 ml autoclave, and the contents were stirred for 18 hours at a hydrogen gas pressure of 3 atm and at 5 °C. Further, the contents were stirred for 7 days at a hydrogen gas pressure of 10 atm and at 18 °C. The reaction mixture was then filtered through celite and washed with ethyl acetate. After the filtrate was washed with water, the organic layer was washed with a saturated NaHCO₃ solution. The aqueous layer was extracted with ethyl acetate, and the organic layers were combined into one organic solution. After the organic solution was dried with anhydrous magnesium sulfate, the solvent was distilled off at a reduced pressure to give 3.03 g (yield: 98.1%) of the captioned compound as white crystals.
mp : 167 to 169 °C
[]_{D}²⁵:+48.9(c 1.10, CHCl₃)
¹H-NMR(CDCl₃): 1.53-1.76(m,8H), 2.16(dt, J=17.1, 6.4Hz, 2H),
2.29(dt, J=17.5, 6.3Hz, 2H), 4.54(s, 2H),
6.83(d, J=8.3Hz, 2H), 7.07(d, J=8.3Hz, 2H)
Mass spectrum: m/z 294(M⁺)

### Example 2

### Synthesis of (R)-2,2'-ditrifluoromethanesulfonyloxy-5,5',6,6',7,7',8,8'-octahydro-1,1'-binaphthyl

(R)-2,2'-dihydroxy-5,5',6,6',7,7',8,8'-octahydro-1,1'-binaphthyl (18.17 g, 61.72 mmol) and pyridine (12.5 ml, 154 mmol) were dissolved in methylene chloride (90 ml) and the solution was cooled down to 0 °C. Then, anhydrous triflate (38.35 g, 135.9 mmol) was added dropwise to the solution and the solution was stirred for 20 hours at room temperature.

The reaction mixture was then admixed with 2N hydrochloric acid (100 ml) and washed. The organic layer was washed three times with water (100 ml) and a sodium chloride aqueous solution (100 ml) in this order. Then, the solvent was distilled off at a reduced pressure to give 36.56 g of residue as a crude product. The crude product was dissolved in hexane and was subjected to a recrystallization treatment to give 32.82 g(95% yield) of the captioned product.

### Example 3

### Synthesis of (R)-2-diphenylphosphinyl-2'-trifluoromethanesulfonyloxy-5,5',6,6',7,7',8,8'-octahydro-1,1'-binaphthyl

(R)-2,2'-ditrifluoromethanesulfonyloxy-5,5',6,6',7,7',8,8'-octahydro-1,1'-binaphthyl (3.0 g, 5.4 mmol), palladium acetate (121 mg, 0.54 mol) and 1,3-bis(diphenylphosphino)propane (222 mg, 0.54 mmol) were dissolved in DMSO (25 ml). The solution was stirred for 1.5 hours at room temperature. The solution was admixed with a solution made by dissolving diphenylphosphine oxide (1.41 g, 7.0 mmol) and diisopropylethylamine (1.04 g, 8.1 mmol) in DMSO (15 ml). The resulting solution was stirred for 6 hours at 100 °C. After being concentrated, the solution was admixed with methylene chloride (40 ml) and 1N hydrochloric acid (20 ml). The solution was then stirred for 30 minutes at room temperature. The solution was allowed to stand and separate into layers, and the aqueous layer was extracted with methylene chloride.

The organic layers were combined into one solution and the solution was washed with water. After being dried with anhydrous magnesium sulfate, the solution was concentrated. The solution was then purified by means of silica gel column chromatography (hexane : ethyl acetate = 4:1 to 1:1 by volume) to obtain 2.13 g (yield: 65%) of the captioned compound as yellowish while crystals.
mp : 148 to 150 °C
[]_{D}²⁴:-3.35(c 1.00, toluene)
³¹P-NMR(CDCl₃) : 28.12(s)
EI-Mass spectrum: m/z 610(M⁺)

### Example 4

### Synthesis of (R)-2-diphenylphosphino-2'-trifluoromethanesulfonyloxy-5,5',6,6',7,7',8,8'-octahydro-1,1'-binaphthyl

Trichlorosilane (2.1 ml, 21 mmol) was added to a mixture of (R)-2-diphenylphosphinyl-2' -trifluoromethanesulfonyloxy-5,5',6,6',7,7',8,8'-octahydro-1,1'-binaphthyl (2.10g, 3.44 mmol), toluene (30 ml) and dimethylaniline (2.50 g, 20.6 mol). The solution was stirred at 90 °C for 1 hour and then heated at reflux for 15 hours. After the reaction mixture was cooled down, 15% NaOH solution (30 ml) was gradually added to the reaction mixture. The aqueous layer was extracted twice with 10 ml of toluene and the organic layers were combined into one solution. The organic solution was washed with water twice (10 ml), 1N hydrochloric acid (30 ml) and water (20 ml) in this order, and was concentrated. Then, the organic solution was purified by means of silica gel column chromatography (hexane : ethyl acetate = 9:0 to 9:1 by volume) to obtain 1.82 g (yield: 89%) of the captioned compound as yellow solids. ³¹P-NMR(CDCl₃): -13.72(s)
CI-Mass spectrum m/z: 595(M⁺+H)

### Example 5

### Synthesis of (R)-2-diphenylphosphino-2'-diphenylphosphinyl-5,5',6,6',7,7',8,8'-octahydro-1,1'-binaphthyl

Under a nitrogen gas stream, a mixture of (R)-2-diphenylphosphino-2'-trifluoromethanesulfonyloxy-5,5',6,6',7,7',8,8'-octahydro-1,1'-binaphthyl (602 mg, 1.01 mmol), Ni(dppe)Cl₂ (30 mg, 0.058 mmol), DABCO (227 mg, 2.03 mmol) and DMF (5 ml) was stirred for 15 minutes at room temperature. The solution was then admixed with diphenylphosphine oxide (381 mg, 1.88 mmol) dissolved in DMF (5 ml). Then, the solution was stirred for 24 hours at 100 °C. After the solvent was distilled off at a reduced pressure, the residual product was dissolved in dichloromethane (10 ml). The organic layer was washed with water (5 ml), 2N hydrochloric acid (4 ml) and water (5 ml) in this order, and the solution was dried with anhydrous sodium sulfate. After the solvent was distilled off at a reduced pressure, the residue was purified by means of silica gel column chromatography (hexane : ethyl acetate = 20:1 to 5:1 by volume) to obtain 0.21 g (yield: 32%) of (R)-2,2'-bis(diphenylphosphino)-5,5',6,6',7,7',8,8'-octahydro-1,1'-binaphthyl (H8-BINAP) and 0.31 g (yield: 47%) of (R)-2-diphenylphosphino-2'- diphenylphosphinyl-5,5',6,6',7,7',8,8'-octahydro-1,1'-binaphthyl.
mp : 224 to 226 °C
[]_{D}²⁵:+91.59(c 0.516, toluene)
³¹P-NMR(CDCl₃): 4 -16.37(s), 28.29(s)
¹H-NMR(CDCl₃): 0.61-0.73(m,1H), 0.99-1.16(m,2H),
1.18-1.48(m,6H), 1.59-1.81(m,3H),
2.52-2.68(m, 4H), 6.88(d, J=7.9Hz, 1H),
6.92-6.98(m, 2H), 7.01-7.12(m, 4H),
7.13-7.58(m,13H), 7.48-7.62(m,4H)
EI-Mass spectrum: m/z 646(M⁺)

### Example 6

### Synthesis of (R)-2,2'-bis(diphenylphosphino)-5,5',6,6',7,7',8,8'-octahydro-1,1'-binaphthyl

Trichlorosilane (0.38 g, 2.8 mmol) was added to a mixture of (R)-2-diphenylphosphinyl-2'-trifluoromethanesulfonyloxy-5,5',6,6',7,7',8,8'-octahydro-1,1'-binaphthyl (0.3 g, 0.46 mmol), toluene (5 ml) and dimethylaniline (0.34 g, 2.8 mmol). The solution was heated under reflux for 21 hours. After the reaction mixture was cooled down, 3N NaOH solution (5 ml) was gradually added dropwise to the reaction mixture. The aqueous layer was extracted twice with 5 ml of toluene and the organic layers were combined into one solution. The organic solution was washed with water (5 ml) twice, 1N hydrochloric acid (5 ml) and water (5 ml) twice in this order, and was concentrated. Then, the organic solution was purified by means of silica gel column chromatography (hexane:ethyl acetate = 1:0 to 9:1 by volume) to obtain 0.27 g (yield: 43%) of the captioned compound as yellow crystals.
mp : 206 to 208 °C
[]_{D}²⁴:+71.9(c 0.50, toluene)
³¹P-NMR(CDCl₃): -15.31(s)
EI-Mass spectrum: m/z 630(M⁺)

### Example 7

### Synthesis of (S)-2,2'-bis(trifluoromethanesulfonyloxy)-1,1'-binaphthyl

(S)-binaphthol (36.2 g, 127 mmol) and pyridine (25.2 g, 319 mmol) were dissolved in methylene chloride (181 ml), and the solution was cooled down to 0 °C. Trifluoromethanesulfonic anhydride (76.5 mg, 271 mmol) was added dropwise to the solution. Then, the solution was stirred for 18 hours at room temperature. The solution was then admixed with 2N hydrochloric acid (200 ml) and washed. The organic layer was washed with water and aqueous sodium chloride solution in this order, and the solvent was distilled off at a reduced pressure to obtain 69.3 g of a crude product. The crude product was purified by means of recrystallization from hexane (280 ml) to give 64.1 g (yield: 92%) of the captioned compound. ¹H-NMR(CDCl₃)ppm: 7.25-8.15(m, ArH)

### Example 8

### Synthesis of (S)-2,2'-ditrifluoromethanesulfonyloxy-5,5',6,6',7,7',8,8'-octahydro-1,1'-binaphthyl

(S)-2,2'-bis(trifluoromethanesulfonyloxy)-1,1'-binaphthyl (1.1 g, 2 mmol), 5%Ru/C (0.1 g) and 95% EtOH (10ml) were placed in an autoclave, and the contents were stirred for 8 hours at a hydrogen gas pressure of 50 atm and at a reaction temperature of 120 °C. Upon completion of the reaction, the catalyst was filtered off and the filtrate was concentrated to give 1.1 g (yield: 98%) of the captioned compound.

## Claims

1. A method of preparing a 2,2'-bis(diarylphosphino)-5,5',6,6',7,7',8,8'-octahydro-1,1'-binaphthyl derivative represented by the general formula (1) 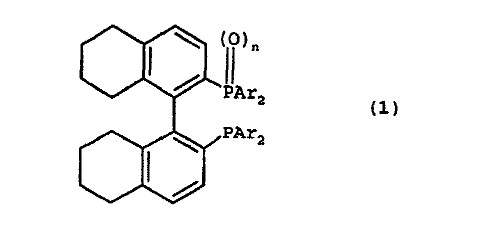 where n represents 0 or 1 ; and Ar represents : a phenyl group ; a substituted phenyl group bearing 1 to 3 substituents which may be the same or different and are selected from the group consisting of a halogen atom, an alkyl group, an alkoxy group and a halogenated alkyl group ; or a naphthyl group which may bear an alkyl or alkoxy substituent ; said alkyl or alkoxy groups having 1 to 5 carbon atoms ;
- by reacting 2,2'-bis trifluoromethanesulfonyloxy-1,1'-octahydrobinaphthyl represented by the general formula (4) 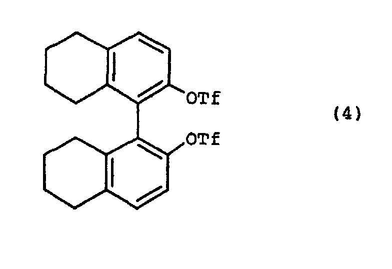
where Tf represents a trifluoromethanesulfonyl group ; with a phosphine oxide represented by the general formula (3)
Ar₂P(O)H (3)
where Ar signifies the same meaning as defined above ; in the presence of a palladium/phosphine complex to prepare 2-trifluoromethanesulfonyloxy-2'-diarylphosphinyl-1,1'-octahydrobinaphthyl represented by the general formula (5) 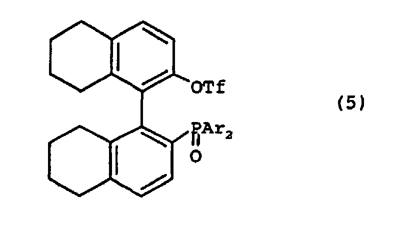 where Tf and Ar signify the same meaning as defined above ;
- by reducing the reaction product to prepare 2-trifluoromethanesulfonyloxy-2'-diarylphosphino-1,1'-octahydrobinaphthyl represented by the general formula (2) 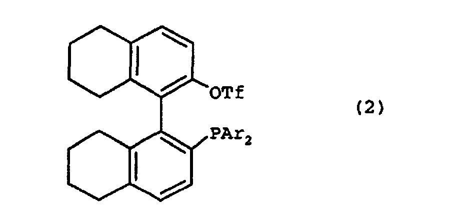
where Tf and Ar signify the same meaning as defined above ;
- by reacting said 2-trifluoromethanesulfonyloxy-2'-diarylphosphino-1,1'-octahydrobinaphthyl with a phosphine oxide represented by the general formula (3) :
Ar₂P(O)H (3)
where Ar signifies the same meaning as defined above ; in the presence of a transition metal/phosphine complex, and optionally by reducing the product of the preceding step to prepare a compound of formula (1) wherein n is 0.

## Patentansprüche

1. Verfahren zur Herstellung eines 2,2'-Bis(diarylphosphino)-5,5',6,6',7,7',8,8'-octahydro-1,1'-binaphthylderivats der allgemeinen Formel (1) 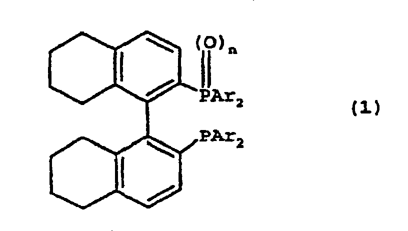 wobei n 0 oder 1 bedeutet; und Ar eine Phenylgruppe; einen substituierten Phenylrest, welcher 1 bis 3 Substituenten trägt, welche gleich oder verschieden sein können und aus einem Halogenatom, einem Alkyl-, Alkoxy- und einem halogenierten Alkylrest ausgewählt sind; oder einen Naphthylrest, welcher einen Alkyl- oder Alkoxysubstituenten tragen kann; wobei der Alkyl- oder Alkoxyrest 1 bis 5 Kohlenstoffatome aufweist, bedeutet;
- durch Umsetzen von 2,2'-Bis(trifluormethansulfonyloxy)-1,1'-octahydrobinaphthyl der allgemeinen Formel (4) 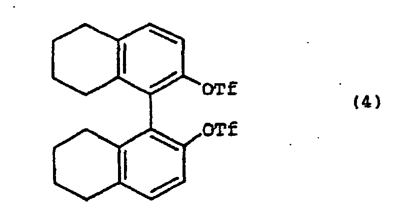
wobei Tf eine Trifluormethansulfonylgruppe bedeutet; mit einem Phosphinoxid der allgemeinen Formel (3)
Ar₂P(O)H (3)
wobei Ar die gleiche Bedeutung hat, wie vorstehend definiert; in Gegenwart eines Palladium/Phosphin-Komplexes, um 2-Trifluormethansulfonyloxy-2'-diarylphosphinyl -1,1'-octahydrobinaphthyl der allgemeinen Formel (5) herzustellen 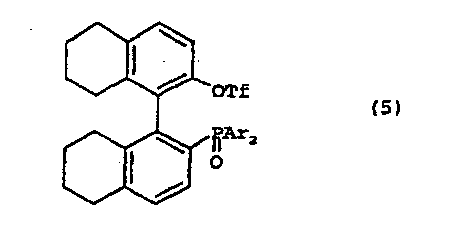 wobei Tf und Ar die gleiche Bedeutung haben, wie vorstehend definiert;
- durch Reduzieren des Reaktionsprodukts, um 2-Trifluormethansulfonyloxy-2'-diarylphosphino-1,1'-octahydrobinaphthyl der allgemeinen Formel (2) herzustellen 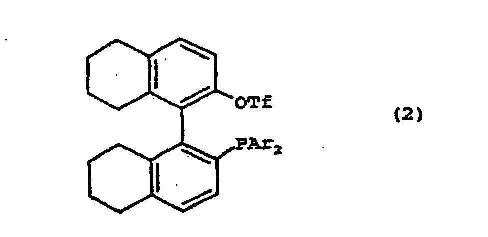
wobei Tf und Ar die gleiche Bedeutung haben, wie vorstehend definiert;
- durch Umsetzen des 2-Trifluormethansulfonyloxy-2'-diarylphosphino-1,1'octahydrobinaphthyl mit einem Phosphinoxid der allgemeinen Formel (3)
Ar₂P(O)H (3)
wobei Ar die gleiche Bedeutung hat, wie vorstehend definiert; in Gegenwart eines Übergangsmetall/Phosphin-Komplexes und gegebenenfalls durch Reduzieren des Produkts des vorstehenden Schritts, um eine Verbindung der Formel (1) herzustellen. wobei n 0 ist.

## Revendications

1. Procédé de préparation d'un dérivé de 2,2'-bis(diarylphosphino)-5,5',6,6',7,7',8,8'-octahydro-1,1'-binaphtyle représenté par la formule générale (1) 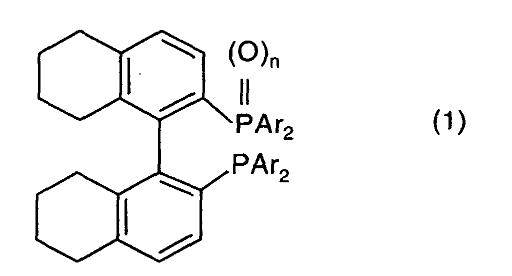 où n représente 0 ou 1 ; et Ar représente : un groupe phényle ; un groupe phényle substitué portant 1 à 3 substituants qui peuvent être identiques ou différents et qui sont choisis dans le groupe consistant en un atome d'halogène, un groupe alkyle, un groupe alcoxy et un groupe alkyle halogène ; ou un groupe naphtyle qui peut porter un substituant alkyle ou alcoxy ; lesdits groupes alkyle ou alcoxy ayant 1 à 5 atomes de carbone ;
- par réaction du 2,2'-bis-trifluorométhanesulfonyloxy-1,1'-octahydrobinaphtyle représenté par la formule générale (4) 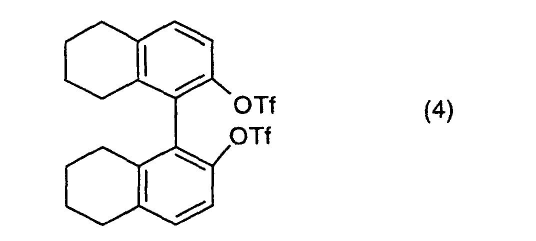
où Tf représente un groupe trifluorométhanesulfonyle ; avec un oxyde de phosphine représenté par la formule générale (3)
Ar₂P(O)H (3)
où Ar a la même signification que ci-dessus ; en présence d'un complexe palladium/phosphine pour préparer un 2-trifluorométhanesulfonyloxy-2'-diarylphosphinyl-1,1'-octahydrobinaphtyle représenté par la formule générale (5) 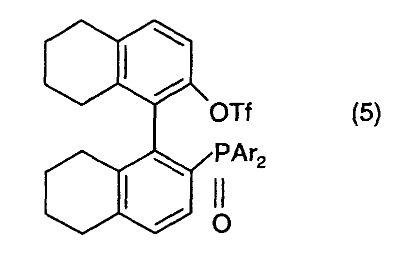 où Tf et Ar ont la même signification que ci-dessus ;
- par réduction du produit réactionnel pour préparer un 2-trifluorométhanesulfonyloxy-2'-diarylphosphino-1,1'-octahydrobinaphtyle représenté par la formule générale (2) 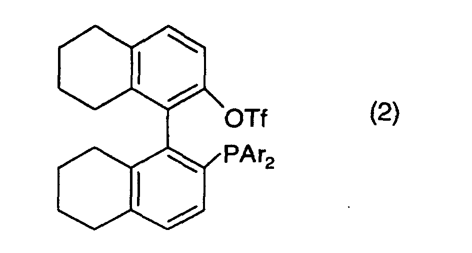
où Tf et Ar ont la même signification que ci-dessus ;
- par réaction dudit 2-trifluorométhanesulfonyloxy-2'-diarylphosphino-1,1'-octahydrobinaphtyle avec un oxyde de phosphine représenté par la formule générale (3)
Ar₂P(O)H (3)
où Ar a la même signification que ci-dessus ; en présence d'un complexe métal de transition/phosphine, et éventuellement par réduction du produit de l'étape précédente pour préparer un composé de formule (1) où n est 0.
